# EUROPÄISCHE PATENTSCHRIFT

(11) **EP 3 857 579 B1**
(45) Veröffentlichungstag und Bekanntmachung des Hinweises auf die Patenterteilung: **29.01.2025**
(21) Anmeldenummer: 19795087.6
(22) Anmeldetag: 10.10.2019
(51) Int. Cl.: H01F 41/02, H01F 3/02, H01F 27/245

(54) **ELEKTROBLECH MIT STRUKTURIERTER OBERFLÄCHE ZUR DOMÄNENVERFEINERUNG**
ELECTRICAL STEEL SHEET HAVING A STRUCTURED SURFACE FOR DOMAINS REFINING
TÔLE ÉLECTRIQUE À SURFACE STRUCTURÉE DESTINÉE À L'AFFINEMENT DE DOMAINES

(30) Priorität: 14.11.2018 EP 18206272
(43) Veröffentlichungstag der Anmeldung: 04.08.2021
(73) Patentinhaber: Siemens Aktiengesellschaft, 80333 München (DE)
(72) Erfinder: BUSCHBECK, Jörg, 90482 Nürnberg (DE); RIEGER, Gotthard, 80636 München (DE); SCHUH, Carsten, 85598 Baldham (DE); SOLLER, Thomas, 94469 Deggendorf (DE); VOLLMER, Rolf, 36129 Gersfeld (DE)
(74) Vertreter: Siemens Patent Attorneys
(86) Internationale Anmeldenummer: PCT/EP2019/077506
(87) Internationale Veröffentlichungsnummer: WO 2020/099037

(56) Entgegenhaltungen:
- EP-A1- 1 354 653
- EP-A1- 3 257 973
- EP-A1- 3 332 905
- US-A- 4 085 603
- US-A1- 2018 057 956

## Beschreibung

Die vorliegende Erfindung betrifft ein Verfahren zur Herstellung eines Elektroblechs. Des Weiteren betrifft die Erfindung ein mittels des genannten Verfahrens hergestelltes Elektroblech.

Elektrische Maschinen bestehen aus verschiedenartig angeordneten Wicklungen, die vom elektrischen Strom durchflossen werden. Der dabei auftretende magnetische Fluss wird in einem magnetischen Kreis, der auch als Magnet- oder Eisenkern bezeichnet wird, gezielt geführt. Dieser Kern besteht aus Materialien, die den magnetischen Fluss gut leiten können, beispielsweise aus geschichtetem Elektroblech. Die Schichtung dient zur Vermeidung von unerwünschten Wirbelströmen.

Standardkerne werden aus gestanzten Einzelblechen hergestellt, die früher durch einseitig aufgeklebte Papierschichten, in modernerer Form durch chemisch aufgebrachte Phosphatierungsschichten isoliert sind. Die Blechstärke für normale Anwendungen in elektrischen Maschinen liegt in der Regel zwischen 0,35 mm und 0,50 mm. Für elektrische Übertrager von höheren Frequenzen oder besonders verlustarme Geräte werden dünnere Bleche mit Kornorientierung und 0,35 mm Stärke verwendet. Schnittband- und Ringkerne werden oft aus noch dünneren und ebenfalls isolierten Bändern gewickelt. Auch sogenannte NO20-Bleche mit einer Dicke von 0,20 mm werden bereits diskutiert.

Im Betrieb von Magnetkernen entstehen durch die wechselnde Polarität des Magnetfeldes im Kern Verluste, die Eisenverluste oder Kernverluste genannt werden. Sie sind die Summe aus den Hystereseverlusten, den Wirbelstromverlusten, den Exzess- oder Zusatzverlusten und den Nachwirkungsverlusten.

Die Exzess- oder Zusatzverluste, die auch als anomale Wirbelstromverluste bezeichnet werden, werden auf den Energiebedarf zurückgeführt, der bei der Magnetisierung magnetischer Elemente durch die Verschiebung der Bloch-Wände entsteht. Für hohe Induktionen sind sie gegenüber den Hysterese- und Wirbelstromverlusten zu vernachlässigen; für geringe Induktionen können sie eine signifikante Rolle spielen.

Es ist bekannt, dass durch Strukturierung der Oberflächen des Elektroblechs die anomalen Wirbelstromverluste im Elektroblech reduziert werden können. Dabei ist die Oberfläche derart zu strukturieren, dass eine Domänenverfeinerung, also eine vorteilhafte Beeinflussung der magnetisierten Domänen, die auch als Weiß'sche Bezirke bezeichnet werden, im Elektroblech erreicht wird.

Eine beispielhafte Oberflächenstrukturierung zur Domänenverfeinerung ist in der europäischen Patentanmeldung EP 0 869 190 A1 offenbart. Hier werden Elektrobleche mit einer großen Anzahl von Rillen auf der Oberfläche charakterisiert, die eine Rillenbreite von 50 µm bis 1000 µm und eine Rillentiefe von 10 µm bis 50 µm aufweisen.

Es ist des Weiteren bekannt, die Oberflächenstrukturen durch Ritzen, durch Ätzen oder mittels Laser zu realisieren.

All die genannten Verfahren und Strukturen sind bisher nur auf herkömmliche, gewalzte Elektrobleche angewendet worden (siehe zum Beispiel US 4 085 603 A).

Neue Verfahren zur Herstellung von Elektroblechen für elektrische Maschinen stellen der Siebdruck und der Schablonendruck dar. Hierbei wird ausgehend von Metallpulvern zunächst eine Druckpaste erzeugt. Diese wird dann mittels der Sieb- bzw. Schablonendrucktechnik zu einer Dickschicht, die auch als Grünkörper oder Grünling bezeichnet wird, verarbeitet. Anschließend wird der entstandene Grünling durch thermische Behandlung in ein metallisches Blech überführt.

Ein weiteres Verfahren, das sich potenziell zur Herstellung eines Elektroblechs eignen könnte, stellt das Foliengießen dar. Der Foliengießprozess besteht darin, ein feingemahlenes Pulver in einem Lösemittelgemisch unter Zusatz geeigneter Dispergatoren zu dispergieren, mit organischen Bindern und Weichmachern zu versetzen und zu einem viskosen Gießschlicker zu verarbeiten. Die Formgebung erfolgt mittels eines Rakels nach dem Doctor-Blade-Verfahren. Während des Trocknungsprozesses wird das Lösemittel vollständig entfernt und es entsteht eine flexible, schneid- und stanzbare Grünfolie. Die in der Folie enthaltenen organischen Bestandteile werden während des Entbinderungs- und Sinterprozesses restlos entfernt. Die Höhe der gegossenen Folie ist durch die Schlickerrheologie und den Rakelspalt beeinflussbar.

Auch bei Elektroblechen, die nicht herkömmlich gewalzt, sondern nach einem Druckverfahren oder Foliengießverfahren hergestellt wurden, können die eingangs erwähnten anomalen Wirbelstromverluste auftreten.

Es stellt sich somit die Aufgabe, in derart hergestellten Elektroblechen die anomalen Wirbelstromverluste zu reduzieren.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung und den Abbildungen.

Die Erfindung betrifft ein Verfahren zur Herstellung eines Elektroblechs mit den folgenden Schritten:
a) Bereitstellen eines Grünlings auf einem Substrat,
b) Strukturieren mindestens einer Oberfläche des Grünlings, und
c) Thermische Behandlung des Grünlings.

Eine Domänenverfeinerung zur Reduzierung anomaler Wirbelstromverluste in Elektroblechen ist bisher nur für gewalzte Elektrobleche bekannt. Dort wird die Oberfläche des fertigen Elektroblech mittels Ritzens, Ätzens oder Laserbehandlung strukturiert.

Eine naheliegende Lösung der Aufgabe, anomale Wirbelstromverluste bei neuartig hergestellten, nicht gewalzten Elektroblechen zu reduzieren, bestünde darin, die oben genannten und bekannten Maßnahmen zur Strukturierung der Oberfläche auf gedruckte oder foliengezogene Elektrobleche zu übertragen. Konkret gelänge man dann zu der Lösung, die Oberfläche eines fertigen gedruckten oder foliengezogenen Elektroblechs mittels Ritzens, Ätzens oder Laserbehandlung zu strukturieren.

Dadurch würde auch tatsächlich eine Reduzierung der anomalen Wirbelstromverluste im Elektroblech erreicht werden.

Die vorliegende Erfindung wählt jedoch eine völlig andere Herangehensweise, die sich nicht nur von der beschriebenen naheliegenden Lösung unterscheidet, sondern auch entscheidende Vorteile ihr gegenüber aufweist.

Im erfindungsgemäßen Verfahren wird nicht die Oberfläche des fertigen Elektroblechs, sondern bereits die Oberfläche des Grünlings strukturiert. Nachdem die Druckpaste bzw. der Gießschlicker getrocknet ist und ein Grünling vorliegt, wird die Oberfläche des Grünlings strukturiert. Erst danach findet die thermische Behandlung des Grünlings statt.

Die am Grünling vorgenommene Oberflächenstrukturierung bleibt durch die thermische Behandlung weitgehend erhalten. Sie bleibt zumindest insoweit erhalten, dass sie ihren Zweck der Domänenverfeinerung erfüllen kann.

Ein wichtiger Vorteil des erfindungsgemäßen Verfahrens besteht darin, dass Schädigungen der Kristallstruktur im Grünling, die üblicherweise durch die Oberflächenstrukturierung auftreten, durch die anschließende thermische Behandlung des Grünlings ausgeheilt werden können. Es ist dafür keine gesonderter Verfahrensschritt notwendig, da die thermische Behandlung zur Entbinderung und Sinterung des Grünlings ohnehin nötig ist.

Im Ergebnis ist es durch die geschickte Abfolge der Prozessschritte (Herstellen des Grünlings - Strukturieren der Oberfläche - Thermische Behandlung des strukturierten Grünlings) möglich, mit relativ geringem Zusatzaufwand eine erhebliche Reduzierung anomaler Wirbelstromverluste in einem gedruckten oder foliengezogenen Elektroblech zu erreichen.

Die Verfahrensschritte a) bis c) sind notwendigerweise in der angegebenen Reihenfolge auszuführen.

Zur Vermeidung etwaiger Missverständnisse folgt eine Klarstellung bezüglich der in dieser Patentanmeldung verwendeten Begrifflichkeit "Elektroblech":
Als "Elektrobleche" werden im Rahmen dieser Patentanmeldung nicht nur gewalzte Bleche wie aus dem Stand der Technik bekannt, sondern auch Formkörper, die mittels Drucktechniken oder Folienziehen erzeugt wurden und die die Funktion und Eigenschaften von herkömmlichen Elektroblechen aufweisen, bezeichnet. Die gedruckten oder gezogenen Elektrobleche können auch als "Materiallagen" bezeichnet werden; dieser Begriff ist als Synonym zu "Elektroblechen" zu sehen. Elektrobleche werden in Fachkreisen auch als "Magnetbleche" oder, je nach Verwendungszweck, als Dynamo-, Motoren- oder Transformatorenbleche bezeichnet.

Ein gesintertes Elektroblech, also ein Elektroblech, das beispielsweise mittels einer Drucktechnik oder Folienziehens einschließlich einer thermischen Behandlung hergestellt wurde, lässt sich in seiner Mikrostruktur eindeutig von einem Elektroblech, das mittels anderer Verfahren, beispielsweise Walzens, hergestellt wurde, unterscheiden.

Unter einem "Grünling" wird der noch ungesinterte Rohling verstanden. Er kann alternativ auch als Grünkörper oder, im Fall des Folienziehens, als Grünfolie bezeichnet werden.

Der in Schritt a) bereitgestellte Grünling kann auf verschiedene Weisen erhalten werden.

Zum einen kann eine Druckpaste mittels Sieb- oder Schablonendruckes auf ein Substrat aufgebracht werden und diese dann getrocknet werden.

Der Siebdruck ist ein Druckverfahren, bei dem eine Druckpaste mit einer Rakel durch ein Sieb, z.B. ein feinmaschiges Gewebe, hindurch auf das zu bedruckende Material, hier das Substrat, gedruckt wird. An denjenigen Stellen des Gewebes, wo dem Druckbild entsprechend keine Druckpaste gedruckt werden soll, werden die Maschenöffnungen des Gewebes durch eine Schablone farbundurchlässig gemacht. Das Gewebe trägt die Schablone aus Kunststoff, zu deren Herstellung die gesamte Fläche des gespannten Gewebes mit einem Fotopolymer beschichtet und über einen positiven Film mit dem zu druckenden Motiv belichtet wird. Das Fotopolymer erhärtet an den nicht zu druckenden Stellen, das unbelichtete Material wird ausgewaschen. Beim Druckvorgang tritt die Druckpaste nur dort durch das Gewebe, wo dieses freigewaschen wurde.

Beim Schablonendruck ohne tragendes Sieb muss die Schablone selbst ausreichend fest sein und ist beispielsweise aus Stahl gefertigt und direkt in den Rahmen gespannt. Die möglichen Druckbilder sind beim Schablonendruck jedoch eingeschränkt.

Das Substrat, auf dem die Druckpaste gedruckt wird, kann selbsttragend, als z.B. plattenförmig, sein. Alternativ sind auch flexible Substrate möglich, wie etwa Folien.

Die Druckpaste basiert in der Regel auf einem Metallpulver. Zum anderen kann ein Gießschlicker auf ein Substrat, das insbesondere als eine Folie ausgestaltet ist, aufgebracht werden und dieser dann getrocknet werden.

Der Gießschlicker umfasst beispielsweise ein feingemahlenes Pulver in einem Lösemittelgemisch. Zur Dispersion des Pulvers im Lösemittel werden vorteilhafterweise geeignete Dispergatoren (Stoffgemische zur Beschleunigung oder Ermöglichung der Dispergierung) hinzugefügt. Optional enthält der Gießschlicker des Weiteren organische Binder und/oder Weichmachern, um eine angestrebte Viskosität des Gießschlickers zu erreichen.

Die Formgebung des Grünlings erfolgt mittels eines Rakels. Hierbei wird vorteilhafterweise das schon seit Jahrzehnten im Rotations- bzw. Kupfertiefdruckverfahren angewandte Doctor-Blade-Verfahren verwendet.

Während des Trocknungsprozesses wird das Lösemittel vollständig entfernt und es entsteht eine flexible, schneid- und stanzbare Grünfolie.

Das erfindungsgemäße Verfahren zur Herstellung eines Elektroblechs bezieht sich also im Speziellen auf die Herstellung gedruckter, insbesondere sieb- oder schablonengedruckter, oder gezogener, insbesondere foliengezogener, Elektrobleche.

Die Strukturierung der Oberfläche des Grünlings kann auf verschiedenen Arten und mit verschiedenen Mitteln durchgeführt werden. Eine nicht abschließende Aufzählung der verschiedenen Wege, die Oberfläche zu strukturieren, beinhaltet:
- Strukturierung der Oberfläche durch additive Fertigungsverfahren;
- Strukturierung der Oberfläche durch Herstellen des Grünlings auf einem strukturierten Substrat;
- Strukturierung der Oberfläche durch Einprägen der Strukturierung;
- Strukturierung der Oberfläche lokale Erwärmung der Oberfläche.

Additive Fertigungsverfahren (*englisch: Additive Manufacturing*)*,* auch als 3D-Druckverfahren bezeichnet, sind Fertigungsverfahren, bei dem Material Schicht für Schicht aufgetragen wird und somit dreidimensionale Gegenstände erzeugt werden. Der schichtweise Aufbau des Gegenstands erfolgt computergesteuert aus einem oder mehreren Werkstoffen nach vorgegebenen Maßen und Formen.

Die additive Strukturierung der Oberfläche des Grünlings erfolgt also durch Hinzufügen von Erhebungen auf der Oberfläche des Grünlings.

Dabei kann einerseits ein Material verwendet werden, das identisch zum Material des Grünlings ist. Alternativ kann auch ein Material verwendet werden, dass sich dezidiert von dem Material des Grünlings unterscheidet.

Für die additive Strukturierung der Oberfläche kann vorteilhafterweise ein ferromagnetisches oder ferrimagnetisches Material, insbesondere ein weichmagnetisches ferrimagnetisches Material, verwendet werden. Weichmagnetische Ferrite haben eine sehr geringe elektrische Leitfähigkeit und können somit eine isolierende Wirkung aufweisen. Exemplarisch können als weichmagnetische Ferrite Mangan-Zink-Ferrite (MnZn) in der Zusammensetzung MnₐZn₍₁₋ₐ₎Fe₂O₄ oder Nickel-Zink-Ferrite (NiZn) in der Zusammensetzung NiₐZn₍₁₋ₐ₎Fe₂O₄ verwendet werden.

Die Strukturierung der Oberfläche des Grünlings durch Herstellen des Grünlings auf einem strukturierten Substrat wird dadurch erreicht, dass das Substrat auf der dem Grünling zugewandten Seite ein Oberflächenprofil aufweist. Dies hat zur Folge, dass der Grünling auf der dem Substrat zugewandten Seite komplementär zum Oberflächenprofil des Substrats strukturiert wird.

Wird der Grünling beispielsweise mittels eines Siebdruckverfahrens hergestellt, erfolgt die Strukturierung der Unterseite des Grünlings dadurch, dass das Substrat auf seiner Oberseite dauerhaft mit einer Strukturierung, z.B. mit Rillen, versehen ist. Wird die Druckpaste nun durch das Sieb gedrückt, wird nicht nur allgemein die Oberfläche des Substrats mit der Druckpaste bedeckt, sondern es werden speziell auch die Rillen des Substrats mit der Druckpaste gefüllt. Nach dem Trocknen der Druckpaste entsteht damit ein Grünling, der auf seiner Unterseite eine Reihe von Erhebung aufweist, die komplementär die Rillen auf der Oberseite des Substrats nachbilden.

Analog ist auch beispielsweise eine Strukturierung der Folie möglich, die sich auf den getrockneten Gießschlicker, also auf den mittels Folienziehverfahrens hergestellten Grünling überträgt.

Die Strukturierung der Oberfläche durch Prägeverfahren erfolgt, nachdem der Grünling zumindest in ausreichendem Maß getrocknet ist. Hierfür wird auf die zu strukturierende Oberfläche ein Prägestempel aufgedrückt. Es können hierfür durchaus erhebliche Kräfte nötig sein. Als Prägeverfahren kommen sowohl Kalt-, Warm- als auch Heißprägen infrage.

Die Strukturierung der Oberfläche des Grünlings kann schließlich auch dadurch erreicht werden, dass der Grünling lokal partiell mittels elektromagnetischer Strahlung erwärmt wird.

Ein Vorteil dieses Verfahrens ist, dass es berührungslos ist. Ein weiterer Vorteil ist, dass im Prinzip sehr feine Strukturen auf der Oberfläche des Grünlings realisierbar sind.

Die lokale Erwärmung des Grünlings mittels elektromagnetischer Strahlung umfasst das Verdampfen sowie das Verdichten oberflächennahen Materials des Grünlings.

Die Erwärmung kann durch einen Laser, beispielsweise einen Neodym-dotierten Yttrium-Aluminium-Granat-Laser (Nd:YAG-Laser) realisiert werden. Alternativ ist auch eine Erwärmung des Grünlings mittels Mikrowellen, d.h. mittels elektromagnetischer Strahlung im Bereich 1 mm bis 300 mm, möglich.

Unter Laserverdampfen, auch als Laserablation bezeichnet, wird das Abtragen von Material von einer Oberfläche durch Beschuss mit gepulster Laserstrahlung verstanden. Die hierbei Verwendung findende Laserstrahlung mit hoher Leistungsdichte führt zur rapiden Erhitzung und der Ausbildung eines Plasmas an der Oberfläche. Bei Laserpulsen im Nanosekundenbereich führt die Energie des Lasers zu einer Aufheizung der Oberfläche (im Sinne von thermischen Bewegungen der Atome) während des Laserpulses. Da die Wärmeleitung nur einen langsamen Energietransport ins Volumen ermöglicht, wird die eingestrahlte Energie auf eine sehr dünne Schicht konzentriert (ca. 1 µm bei 10 ns Pulslänge), daher erreicht die Oberfläche sehr hohe Temperaturen und es kommt zum schlagartigen Verdampfen des Materials.

Die Oberflächenstruktur, beispielsweise Rillen, die mittels der Laserablation auf den Grünling aufgebracht wurde, bleibt auch nach der thermischen Behandlung zumindest in solchem Ma-ße erhalten, dass eine Domänenverfeinerung des Elektroblechs erreicht wird.

Bei der Verdichtung oberflächennahen Materials des Grünlings durch lokale Erwärmung kommt es dagegen nicht zu einer Verdampfung, sondern lediglich zu einer "Kompression" des behandelten Materials. Der Effekt dieser Verdichtung besteht darin, dass das Sinterverhalten im nachfolgenden Schritt der thermischen Behandlung des Grünlings modifiziert wird und daraus eine Strukturierung der Oberfläche resultiert.

Wird der Grünling durch Aufbringen eines Gießschlickers auf das Substrat erzeugt, besteht eine weitere Möglichkeit der Strukturierung der Oberfläche des Grünlings in der Verwendung eines fokussierten Sprühstrahls. Je nach dem verwendeten Gießschlicker ist der Sprühstrahl insbesondere so ausgelegt, dass fokussiert Wasser oder ein Lösungsmittel auf die Oberfläche des Grünlings gesprüht wird. Dadurch kann die Oberfläche des Grünlings, insbesondere die dort vorhandenen organischen Binder, selektiv angelöst und Material von dort ausgeschwemmt werden. Auch hier bleibt die entstandene Strukturierung nach der thermischen Behandlung zumindest in solchem Ma-ße erhalten, dass eine Domänenverfeinerung des Elektroblechs erreicht wird.

Schließlich betrifft die Erfindung auch ein mittels eines der genannten Verfahren hergestelltes Elektroblech.

Derartige Elektrobleche können vorteilhafterweise in einer elektrischen Maschine verwendet werden. Hiervon umfasst sind rotierende elektrische Maschinen, insbesondere Elektromotoren und elektrische Generatoren zur Wandlung von Energie, sowie ruhende elektrische Maschinen, insbesondere Transformatoren zur Wandlung einer Eingangswechselspannung in eine Ausgangswechselspannung.

Nachfolgend wird die Erfindung anhand mehrerer beispielhafter Ausführungsbeispiele unter Bezugnahme auf die angehängten Zeichnungen beschrieben, in der
- Fig. 1: ein erstes Ausführungsbeispiel eines Verfahrens zur Oberflächenstrukturierung eines Grünlings,
- Fig. 2: ein zweites Ausführungsbeispiel eines Verfahrens zur Oberflächenstrukturierung eines Grünlings,
- Fig. 3: ein drittes Ausführungsbeispiel eines Verfahrens zur Oberflächenstrukturierung eines Grünlings, und
- Fig. 4: ein viertes Ausführungsbeispiel eines Verfahrens zur Oberflächenstrukturierung eines Grünlings darstellt.

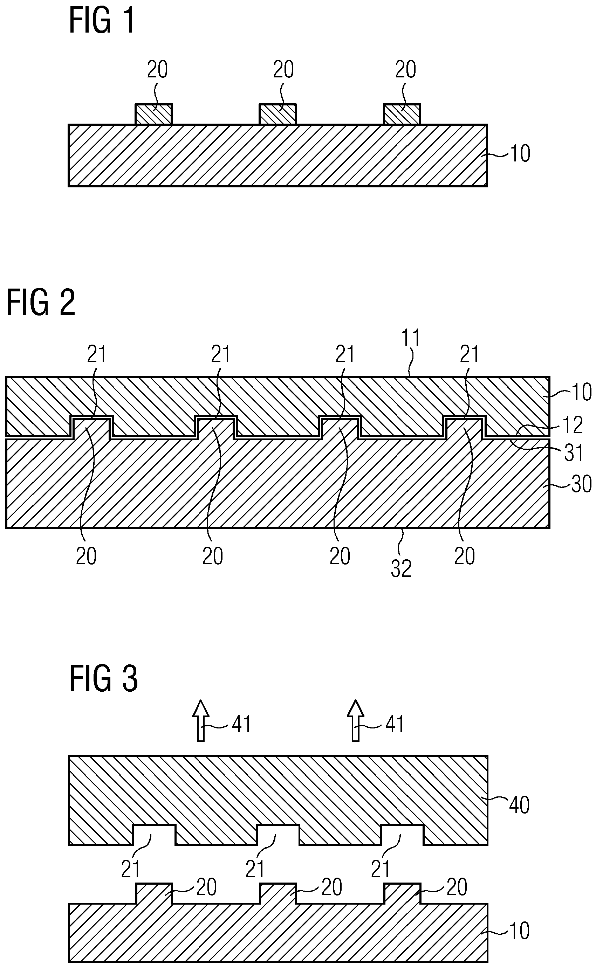

Die Fig. 1 illustriert schematisch einen Grünling 10, dessen eine Oberfläche durch ein additives Fertigungsverfahren strukturiert wurde. Konkret wurden mehrere Erhebungen 20 schichtweise auf die Oberfläche des Grünlings 10 aufgebracht. Hierfür werden dem Fachmann bekannte additive Fertigungsverfahren verwendet. Nach dem Aufbau der Erhebungen 20 folgt eine thermische Behandlung des Grünlings 10, die sowohl den Grünling 10 entbindert und sintert als auch die Kristallstruktur der Erhebungen 20 ausheilt.

Im konkreten in Fig. 1 gezeigten Beispiel besteht der Grünling 10 aus einem anderen Material als die schichtweise aufgebrachten Erhebungen 20. Es kann aber alternativ auch vorteilhaft sein, für die Erhebungen 20 dasselbe Material wie für den Grünling 10 selbst zu wählen.

Die Fig. 2 illustriert schematisch einen Grünling 10, dessen eine Oberfläche durch Herstellen des Grünlings 10 auf einem strukturierten Substrat 30 strukturiert wurde.

Das Substrat 30 weist eine erste Seite 31 und eine gegenüberliegende zweite Seite 32 auf. Die erste Seite 31 ist dafür vorgesehen, dass auf ihr der Grünling 10 bzw. dessen Ausgangsmaterial aufgebracht wird. Im Fall eines Druckverfahrens für die Herstellung des Grünlings 10 ist die erste Seite 31 des Substrats 30 also dafür vorgesehen, dass auf ihr die Druckpaste aufgebracht wird. Im Fall des Folienziehens für die Herstellung des Grünlings 10 ist die erste Seite 31 des Substrats 30 dafür vorgesehen, dass auf ihr der Gießschlicker aufgebracht wird.

Das Substrat 30 ist im Wesentlichen planar, d.h. es weist eine hohe Planarität auf. Es weist jedoch auf der ersten Seite 31 mehrere Erhebungen 20 auf. Wird nun das den Grünling 10 bildende Material (z.B. die Druckpaste oder der Gießschlicker) auf das Substrat 30 aufgebracht, erhält die dem Substrat 30 zugewandten Seite des Grünlings 10, die in Fig. 2 als die zweite Seite 12 referenziert ist, eine der Strukturierung der ersten Seite 31 des Substrats 30 komplementäre Strukturierung. Im konkreten Beispiel von Erhebungen 20 auf dem Substrat 32 weist der Grünling also entsprechende Rillen 21 auf. Die der zweiten Seite 12 des Grünlings gegenüberliegende Seite, die als erste Seite 11 referenziert ist, ist hingegen im Wesentlichen planar, also unstrukturiert.

Die Fig. 3 illustriert schematisch einen Grünling 10, dessen eine Oberfläche durch ein Prägeverfahren strukturiert wird.

Hierfür sollte der Grünling 10 in solchem Maß getrocknet sein, dass eine Prägung nach Entfernung des Prägestempels dauerhaft bestehen bleibt. Zwar muss der Grünling andererseits noch formbar sein; dies ist jedoch in der Regel durch eine entsprechend große Kraft auf das Werkstück, also den Grünling, zu erreichen (man denke beispielsweise an die Prägung von Münzen). Auf die zu strukturierende Oberfläche des Grünlings 10 wird der Prägestempel 40 aufgedrückt, der, im konkreten Ausführungsbeispiel der Fig. 3 mehrere Rillen 21 aufweist. Es wird eine komplementäre Strukturierung erreicht, hier entsprechende Erhebungen 20 auf dem Grünling 10, indem die Bereiche zwischen den Rillen 21 zusammen- oder weggedrückt werden. Nach Entfernung des Prägestempels 40 (siehe die Bewegungsrichtung 41 des sich entfernenden Prägestempels 40 in Fig. 3) bleibt die Strukturierung des Grünlings 10 dauerhaft erhalten.

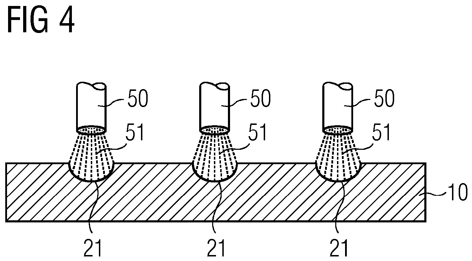

Die Fig. 4 illustriert schematisch einen Grünling 10, dessen eine Oberfläche durch mehrere Laser 50 bearbeitet wird.

Dabei emittieren die Laser 50 elektromagnetische Strahlung 51 mit hoher Leistungsdichte. Es handelt sich um gepulste Laser 50 mit Laserpulsen im Nanosekundenbereich. Dies führt in den betroffenen Bereichen zu einer rapiden Erhitzung und Ausbildung von Plasma. Aufgrund der sehr hohen Temperaturen kommt es zu einem schlagartigen Verdampfen von Material. Daraus resultieren die in Fig. 4 sichtbaren Rillen 21. Die Rillen 21, die mittels der Laserablation auf den Grünling 10 aufgebracht wurden, bleiben auch nach der thermischen Behandlung zumindest in solchem Maße erhalten, dass eine Domänenverfeinerung des Elektroblechs erreicht wird.

## Patentansprüche

1. Verfahren zur Herstellung eines Elektroblechs, wobei das Verfahren die folgenden Schritte umfasst:
a) Bereitstellen eines Grünlings (10) auf einem Substrat (30),
b) Strukturieren mindestens einer Oberfläche des Grünlings (10), und
c) Thermische Behandlung des Grünlings (10) **dadurch gekennzeichnet, dass** die Bereitstellung des Grünlings (10) die folgenden Schritte umfasst: Aufbringen einer Druckpaste auf dem Substrat (30) mittels Sieb- oder Schablonendruckes; und
Trocknen der sich auf dem Substrat (30) befindlichen Druckpaste zum Erhalt des Grünlings (10); oder
Aufbringen eines Gießschlickers auf dem Substrat (30), das insbesondere als Folie ausgestaltet ist; und
Trocknen des sich auf der Folie befindlichen Gießschlickers zum Erhalt des Grünlings (10).

2. Verfahren nach Anspruch 1,
wobei die Strukturierung der Oberfläche des Grünlings (10) durch additives Strukturieren der Oberfläche mittels eines additiven Fertigungsverfahrens erfolgt.

3. Verfahren nach Anspruch 2,
wobei die additive Strukturierung der Oberfläche durch Hinzufügen von Erhebungen (20) mit einem Material erfolgt, das identisch zum Material des Grünlings (10) ist.

4. Verfahren nach Anspruch 2,
wobei die additive Strukturierung der Oberfläche durch Hinzufügen von Erhebungen (20) mit einem Material erfolgt, das sich von dem Material des Grünlings (10) unterscheidet.

5. Verfahren nach einem der Ansprüche 2 bis 4,
wobei die additive Strukturierung der Oberfläche mit einem ferro- oder ferrimagnetischem Material erfolgt, insbesondere einem weichmagnetischem ferrimagnetischem Material.

6. Verfahren nach einem der Anspruch 1,
wobei die Strukturierung der Oberfläche des Grünlings (10) dadurch erreicht wird, dass das Substrat (30) auf der dem Grünling (10) zugewandten Seite ein Oberflächenprofil aufweist, so dass der Grünling (10) auf der dem Substrat (30) zugewandten Seite komplementär zum Oberflächenprofil des Substrats (30) strukturiert wird.

7. Verfahren nach Anspruch 1,
wobei die Oberflächenstruktur des Grünlings (10) vor dessen thermischen Behandlung eingeprägt wird.

8. Verfahren nach Anspruch 1,
wobei das die Strukturierung der Oberfläche dadurch erreicht wird, dass der Grünling (10) lokal partiell mittels elektromagnetischer Strahlung erwärmt wird.

9. Verfahren nach Anspruch 8,
wobei die Erwärmung mittels eines Lasers (50) realisiert wird.

10. Verfahren nach Anspruch 8,
wobei die elektromagnetische Strahlung im Mikrowellenbereich liegt.

## Claims

1. Method for producing an electrical steel sheet, wherein the method comprises the following steps:
a) providing a green body (10) on a substrate (30),
b) structuring at least one surface of the green body (10), and
c) thermally treating the green body (10)
**characterised in that**
the provision of the green body (10) comprises the following steps: applying a printing paste onto the substrate (30) by means of screen printing or stencil printing; and
drying the printing paste situated on the substrate (30) to obtain the green body (10); or
applying a castable slurry to the substrate (30), which is configured, in particular, as a tape, and
drying the castable slurry situated on the tape to obtain the green body (10).

2. Method according to claim 1,
wherein the structuring of the surface of the green body (10) takes place by means of additive structuring of the surface by means of an additive production method.

3. Method according to claim 2,
wherein the additive structuring of the surface takes place by adding elevations (20) with a material that is identical to the material of the green body (10).

4. Method according to claim 2,
wherein the additive structuring of the surface takes place by adding elevations (20) with a material that is different from the material of the green body (10).

5. Method according to one of claims 2 to 4,
wherein the additive structuring of the surface takes place with a ferromagnetic or ferrimagnetic material, in particular, a soft ferrimagnetic material.

6. Method according to claim 1,
wherein the structuring of the surface of the green body (10) is achieved in that the substrate (30) has a surface profile on the side facing toward the green body (10) so that the green body (10) is structured complementary to the surface profile of the substrate (30) on the side facing toward the substrate (30).

7. Method according to claim 1,
wherein the surface structure of the green body (10) is stamped before its thermal treatment.

8. Method according to claim 1,
wherein the structuring of the surface is achieved in that the green body (10) is locally partially heated by means of electromagnetic radiation.

9. Method according to claim 8,
wherein the heating is realised by means of a laser (50).

10. Method according to claim 8,
wherein the electromagnetic radiation lies in the microwave range.

## Revendications

1. Procédé de fabrication d'une tôle électrique, dans lequel le procédé comprend les stades suivants :
a) préparation d'une ébauche (10) sur un substrat (30),
b) structuration d'au moins une surface de l'ébauche (10), et
c) traitement thermique de l'ébauche (10)
**caractérisé en ce que**
la préparation de l'ébauche (10) comprend les stades suivants : dépôt d'une pâte d'impression sur le substrat (30) au moyen d'une sérigraphie ou d'une impression au stencil ;
et
séchage
de la pâte d'impression se trouvant sur le substrat (30) pour obtenir l'ébauche (10) ; ou
dépôt d'une barbotine coulable sur le substrat (30), qui est conformée en particulier en feuille ; et
séchage de la barbotine coulable se trouvant sur la feuille pour obtenir l'ébauche (10).

2. Procédé suivant la revendication 1,
dans lequel la structuration de la surface de l'ébauche (10) s'effectue par structuration additive de la surface au moyen d'un procédé de fabrication additif.

3. Procédé suivant la revendication 2,
dans lequel la structuration additive de la surface s'effectue par ajout de protubérances (20) en un matériau, qui est le même que le matériau de l'ébauche (10).

4. Procédé suivant la revendication 2,
dans lequel la structuration additive de la surface s'effectue par ajout de protubérances (20) en un matériau, qui se distingue du matériau de l'ébauche (10).

5. Procédé suivant l'une des revendications 2 à 4,
dans lequel la structuration additive de la surface s'effectue par un matériau ferromagnétique ou ferrimagnétique, en particulier par un matériau ferrimagnétique à magnétisme doux.

6. Procédé suivant la revendication 1,
dans lequel on obtient la structuration de la surface de l'ébauche (10), par le fait que le substrat (30) a du côté tourné vers l'ébauche (10) un profil de surface, de sorte que l'ébauche (10) est structurée du côté tourné vers le substrat (30) d'une manière complémentaire au profil de surface du substrat (30).

7. Procédé suivant la revendication 1,
dans lequel on estampe la structure de surface de l'ébauche (10) avant son traitement thermique.

8. Procédé suivant la revendication 1,
dans lequel on obtient la structuration de la surface, par le fait que l'on chauffe l'ébauche (10) localement partiellement au moyen d'un rayonnement électromagnétique.

9. Procédé suivant la revendication 8,
dans lequel on réalise l'échauffement au moyen d'un laser (50).

10. Procédé suivant la revendication 8,
dans lequel le rayonnement électromagnétique est dans le domaine des micro-ondes.
